# EUROPEAN PATENT APPLICATION

(11) **EP 4 786 035 A1**
(43) Date of publication of application: **05.08.2026**
(21) Application number: 25154720.4
(22) Date of filing: 29.01.2025
(51) Int. Cl.: B01D 63/06, B01D 63/08, B01D 63/14, B01D 65/00

(54) **FILTER MODULES WITH IMPROVED CONNECTION BETWEEN POLYMER MEMBRANE AND ANCHORING ELEMENT**

(71) Applicant: Sartorius Stedim Biotech GmbH, 37079 Göttingen (DE)
(72) Inventor: Dippel, Jannik, 37079 Göttingen (DE); Dorfschäfer, Philipp, 37079 Göttingen (DE); Dippel, Ursula, 37079 Göttingen (DE)
(74) Representative: Müller-Boré & Partner Patentanwälte PartG mbB

(57) **Abstract**

In one aspect, the present invention relates to a filter module comprising a polymer membrane and at least one anchoring element, wherein a peripheral region of the polymer membrane is embedded in the at least one anchoring element, and wherein the material constituting the at least one anchoring element comprises a polyolefin, at least part of which is modified with a modifying agent having a hydrophilicity higher than that of the unmodified polyolefin. In a further aspect, the present invention relates to a method of manufacturing the filter module. In another aspect, the present invention relates to the use of the filter module.

## Description

The present invention relates to a filter module, to a method of manufacturing the filter module, and to the use of the filter module.

In the art, filter modules are known which are used for particle filtration, sterile filtration, ultrafiltration or virus filtration of a fluid medium. Typically, such filter modules comprise a polymer membrane, also referred to as filter membrane or simply as membrane, and at least one anchoring element for sealing the polymer membrane. For this purpose, the peripheral region of the polymer membrane is connected to the at least one anchoring element.

Depending on the shape of the polymer membrane, the connection between the polymer membrane and the anchoring element may be established by various means including welding, overmolding or gluing. For instance, to establish the connection, the peripheral region of the polymer membrane may be embedded in the anchoring element, also referred to as hot plate welding. In order to do so, the anchoring element must be transferred to a softened state. For this reason, thermoplastic polymers, in particular polyolefins such as polyethylene and polypropylene, are widely used as the material constituting the at least one anchoring element. In this regard, polypropylene is particularly favorable. Apart from its low price, polypropylene has superior characteristics such as enhanced chemical resistance, autoclavability and processability as well as a beneficial combination of stiffness and impact resistance.

In contrast to polyolefins like polypropylene, the polymer that constitutes the polymer membrane often has suitable functional groups which render the membrane surface hydrophilic. Otherwise, a spontaneous wetting of the membrane surface with water might not be possible, which is, however, crucial when testing the filter module for filtration of liquids as well as for leakage. Nowadays, before being used in industrial biopharmaceutical applications, filter modules have to be tested for leakage and pass a so-called integrity test.

Since the hydrophilic membrane surface may not be compatible with the hydrophobic anchoring element, the connection between the polymer membrane and the anchoring element may prove to be inadequate. As a result, the filter module does not satisfy the required fluid-tightness, which means that it does not pass the obligatory integrity test. Besides, if there is a leakage in the filter module, sterility cannot be ensured and the retention capacity of the filter module may remarkably decrease. Thus, particle filtration, sterile filtration, ultrafiltration or virus filtration of a fluid medium is no longer feasible. Ultimately, this means that the filter module has to be discarded, being detrimental both from an economic point of view and from an ecologic point of view.

To overcome the above-mentioned issues which are caused by an inadequate connection between the polymer membrane and the anchoring element, different techniques have been reported in the art.

In this context, WO 2019/179938 A1 describes a filter module comprising a filter membrane, a porous edge structure arranged on the peripheral region of the membrane, and at least one anchoring element, wherein at least part of the membrane and at least part of the porous edge structure are embedded together in the at least one anchoring element. The porous edge structure serves as an edge reinforcement in the embedding of the membrane in the at least one anchoring element, and this edge reinforcement allows the filter module to be fluid-tight in the peripheral region of the membrane. However, the production of a filter module having a porous edge structure arranged on the peripheral region of the membrane requires additional process steps, making this approach rather cumbersome.

Further, WO 2024/003246 A1 describes a filter module comprising an ester-based membrane and at least one anchoring element, wherein the membrane surface is saponified in the regions other than the peripheral region of the membrane connected to the at least one anchoring element. At the time the peripheral region of the membrane is embedded in the at least one anchoring element, the membrane surface is hydrophobic due to the presence of ester groups with the result that the membrane surface is compatible with the hydrophobic anchoring element. Then, after the connection has been established, saponification is carried out, transforming the ester groups into hydroxy groups, to render the membrane surface hydrophilic. As the membrane surface is saponified in a state where the peripheral region of the membrane is already embedded in the at least one anchoring element, saponification does not affect the ester groups present in the peripheral region where the connection is established. As a result, fluid-tightness in the peripheral region of the membrane embedded in the at least one anchoring element also remains unaffected. Being restricted to ester-based membranes, this approach has limited versatility.

Accordingly, there exists a need for novel approaches which overcome the drawbacks associated with the techniques reported in the art for adequately connecting a polymer membrane with the at least one anchoring element so that sterility and retention capability of the filter module can be maintained.

The above technical problem underlying the present invention has been solved by providing the subject matter set out in the appended claims.

In one aspect, the present invention provides a filter module comprising a polymer membrane and at least one anchoring element,
wherein a peripheral region of the polymer membrane is embedded in the at least one anchoring element, and
wherein the material constituting the at least one anchoring element comprises a polyolefin, at least part of which is modified with a modifying agent having a hydrophilicity higher than that of the unmodified polyolefin.

Since at least part of the polyolefin comprised in the material constituting the at least one anchoring element is modified with a modifying agent having a hydrophilicity higher than that of the unmodified polyolefin, the at least one anchoring element is rendered sufficiently hydrophilic. Thus, its compatibility with the membrane surface is enhanced, thereby allowing for an adequate connection between the polymer membrane and the at least anchoring element when the peripheral region of the polymer membrane is embedded therein. Advantageously, the above-defined filter module, hereinafter also referred to as filter module according to the present invention, has excellent fluid-tightness with the result that a leakage in the filter module can be suppressed. As such, the filter module according to the present invention can be suitably used for particle filtration, sterile filtration, ultrafiltration or virus filtration of a fluid medium. Further, compared to the techniques reported in the art for adequately connecting a polymer membrane with the at least one anchoring element, the present approach is less cumbersome and has more versatility.

In the following, the filter module according to the present invention will be described in detail.

As mentioned above, the filter module according to the present invention comprises a polymer membrane. By definition, a polymer membrane is a porous structure made from a polymeric material that acts as a selective (semi-permeable) barrier for the separation of a substance present in a fluid medium such as a gas or a liquid. The pore size and the thickness of the polymer membrane, which govern its selectivity and permeability, can be controlled by appropriately setting the membrane-forming conditions. Typically, the polymer membrane is a hydrophilic membrane, i.e. the polymer membrane is more hydrophilic than the unmodified polyolefin constituting the at least one anchoring element, particularly more hydrophilic than unmodified homopolypropylene. Since the term "hydrophilicity" is only used herein in a relative manner for the sake of comparison of different materials, any of the hydrophilicity determination methods known in the art may be employed to characterize the relative hydrophilicities of the different materials.

Herein, the polymer membrane may be obtained by any suitable means known in the art. Without limitation, a typical production process includes the step of providing a casting solution comprising the polymeric material as the membrane-forming polymer dissolved in an organic solvent; the step of forming a polymer thin film from the casting solution; the step of contacting the polymer thin film with a liquid precipitation bath, with a gaseous phase comprising a precipitation-inducing agent, or with a combination thereof to induce membrane formation; and the step of drying the obtained polymer membrane. Details of such production process are described in WO 2020/260473 A1, for instance.

While the polymer membrane which is obtained using a casting solution has a flat shape, it is also possible to produce hollow fiber membranes. In a typical production process, hollow fiber membranes are obtained by melt spinning in which a membrane-forming polymer is melted and extruded through a spinneret into air and subsequently cooled. Details of such production process are described in C. Wojciechowski et al., "A Comprehensive Review of Hollow-Fiber Membrane Fabrication Methods across Biomedical, Biotechnological, and Environmental Domains", Molecules, 2024, 29(11), 2637, for instance.

Depending on the intended use of the filter module, i.e., depending on the particle size of the substance to be separated, the polymer membrane has a suitable pore size. Typical pore sizes are in the range of 0.005 µm to 10 µm, with a pore size in the range of 0.01 µm to 1.2 µm being preferable, and with a pore size in the range of 0.02 µm to 0.45 µm being more preferable.

For determining pore sizes which are equal to or more than 0.1 µm, capillary flow porometry is applied. Capillary flow porometry is a gas-liquid porosimetry technique in which the differential gas pressures and flow rates through a membrane sample are measured first in the wet state and then in the dry state. Before the measurement, the membrane sample is contacted with a wetting liquid such that all pores present are filled with said wetting liquid. Once the pores are filled, the membrane sample is introduced into the measurement cell. After closing the measurement cell and starting the measurement, the gas pressure is increased in an automatic and stepwise manner, and the pore diameters in accordance with the pressure being applied are emptied as a result of the gas pressure. This is done until all the relevant pore sizes have been captured, i.e., until even the smallest pores present in the measurement range have been cleared of the liquid. Thereafter, the pressure is dropped back down, and the measurement is automatically repeated on the now dry membrane sample. From the difference between the two pressure/flow rate curves, the pore size distribution is calculated via the Young-Laplace equation (see A. Shrestha, "Characterization of porous membranes via porometry", Mechanical Engineering Graduate Theses & Dissertations, Paper 38, University of Colorado at Boulder, 2012).

On the other hand, for determining pore sizes which are less than 0.1 µm, liquid-liquid displacement porosimetry is applied. As known to the skilled person, liquid-liquid displacement porosimetry has similarities to capillary flow porometry. However, it is not the gas flow rates that are measured but rather the flow rates of the liquid which is displaced as a function of the differential pressure increase (see R. Davila, "Characterization of ultra and nanofiltration commercial filters by liquid-liquid displacement porosimetry", 2013).

Concerning the thickness of the polymer membrane, the present invention is likewise not subject to any particular limitation. For example, the polymer membrane may have a thickness in the range of 20 µm to 400 µm, preferably in the range of 100 µm to 300 µm. Herein, the thickness of the polymer membrane is measured using a commercially available film thickness gauge with a scale value of 1 µm (HAHN+KOLB Werkzeuge GmbH, Ludwigsburg, Germany).

Regarding the polymer that constitutes the polymer membrane, any polymeric material that is known in the art as a suitable membrane-forming polymer may be mentioned. Without limitation, the polymer constituting the polymer membrane may be at least one selected from the group consisting of polysulfone, polyethersulfone, polyarylsulfone, cellulose, cellulose acetate, cellulose nitrate, polyether ether ketone, polyacrylonitrile, polyimide and polyamide. All of these polymers have in common that they are more hydrophilic than polyolefins like polypropylene. Among these polymers, polyethersulfone, cellulose and cellulose acetate are preferred as the polymer constituting the polymer membrane.

As mentioned above, the membrane surface needs to be hydrophilic to allow for a spontaneous wetting with water. In case the polymer that constitutes the polymer membrane is not inherently hydrophilic, the surface of the polymer membrane may be permanently hydrophilized. Here, the expression "permanently hydrophilized" means that the membrane surface has been modified such that it remains hydrophilic even under mechanical, thermal and chemical action. Regarding the type and manner of permanent hydrophilization, there are no particular limitations to be mentioned. Means for achieving such permanent hydrophilization are known to the skilled person. Typically, it is effected by covalent or non-covalent modification of an unmodified polymer membrane with a monomeric or polymeric hydrophilizing agent before establishing the connection between the polymer membrane and the at least one anchoring element. Suitable hydrophilizing agents include hydroxyalkylcellulose, polyvinylpyrrolidone and poly-2-ethyloxazoline. Further details can be found in WO 2013/159855 A1, for instance.

Apart from the above-mentioned permanent hydrophilization if applied, for obtaining a fluid-tight connection between the polymer membrane and the at least one anchoring element, it is preferred that the polymer membrane is not subject to any other additional modification, such as a coating or a thermal treatment, in the peripheral region of the polymer membrane embedded in the at least one anchoring element, since such additional modification is not necessary and may even impair the connection between the polymer membrane and the at least one anchoring element. In the same way, it is preferred that the polymer membrane does not have a porous edge structure arranged on the peripheral region of the polymer membrane embedded in the at least one anchoring element. According to the present invention, such porous edge structure is not required for adequately connecting the polymer membrane with the at least one anchoring element.

As far as the (geometric) shape of the polymer membrane is concerned, the present invention is not further limited. For example, the polymer membrane may have a tubular shape. To this end, a polymer membrane having a flat shape may be closed by means of ultrasonic welding. As a result, a cylindrical arrangement having a circular cross-section with two open end faces is obtained. In an analogous manner, also proceeding from a polymer membrane having a flat shape, it is possible to obtain a prism-shaped arrangement having a polygonal cross-section, e.g., a square cross-section, with two open end faces. Each of said two open end faces may be regarded as the peripheral region of the polymer membrane to be embedded in a respective anchoring element after softening the same. As required, before it is closed to form a tube, the polymer membrane having a flat shape may be pleated. Thereby, the filtration area of the polymer membrane is increased without increasing the size of the final filter module. In general, filter modules comprising a polymer membrane which has a tubular optionally pleated shape are referred to as filter cartridges. Instead of a tubular shape, the flat shape of the polymer membrane may be retained, which means that the perimeter of the polymer membrane may be regarded as the peripheral region of the polymer membrane to be embedded in a respective anchoring element after softening the same. In general, filter modules comprising a polymer membrane which has a flat shape are referred to as flat sheet filters or flat sheet modules.

In case of filter cartridges, the at least one anchoring element may be an end cap or a part of an end cap. On the other hand, in case of flat sheet filters or flat sheet modules, the at least one anchoring element may be a frame. Accordingly, the shape of the polymer membrane predetermines the shape of the at least one anchoring element. Moreover, the shape of the polymer membrane predetermines the number of anchoring elements. While filter cartridges typically have two anchoring elements, flat sheet filters or flat sheet modules typically have one anchoring element only. As far as hollow fiber membranes are concerned, one end or both ends thereof may be connected to the at least one anchoring element, e.g., to an end cap.

The filter module according to the present invention comprises the at least one anchoring element for sealing the polymer membrane with the aim to ensure sterility of the filter module as well as resistance to operational pressure(s). For this purpose, a peripheral region of the polymer membrane is connected to the at least one anchoring element. Here, the connection is established by embedding, which requires the at least one anchoring element to be transferable to a softened state. A softened state is reached at a point when the material constituting the at least one anchoring element has lost its initial rigidity and brittleness, becoming more pliable and viscous. The point where the softened state starts to occur is the so-called glass transition temperature in case the polymer is amorphous. Otherwise, in case the polymer is semicrystalline, softening occurs at the melting temperature. In thermoplastic polymers, the softened state is characterized in that the intermolecular forces between the polymer chains have become weak. That is, the thermal kinetic energy is high enough to allow the polymer chains to slide independently from each other. By controlling the length of the polymer chains, it is possible to control the extent of the intermolecular forces and to set a specific glass transition temperature or a specific melting temperature.

According to the present invention, the material constituting the at least one anchoring element comprises a polyolefin, at least part of which is modified with a modifying agent having a hydrophilicity higher than that of the unmodified polyolefin. Being hydrophobic, an anchoring element made of an unmodified polyolefin alone may result in an inadequate connection with the polymer membrane and its hydrophilic membrane surface. However, as found by the present inventors, when specifically modifying the polyolefin comprised in the material constituting the at least one anchoring element, the compatibility of the hydrophilic membrane surface with the at least one anchoring element can be enhanced so that a robust fluid-tight embedding can be achieved.

Particularly, as regards the polyolefin comprised in the material constituting the at least one anchoring element, polyethylene including both homopolymers and copolymers thereof, polypropylene including both homopolymers and copolymers thereof, and a blend of polyethylene and polypropylene may be mentioned. However, in principle, other polyolefins may be used as well, such as cyclic olefin copolymers. The polyolefin is preferably (homo)polypropylene in view of its superior characteristics mentioned above.

By definition, a polyolefin, also referred to as polyalkene, is obtained by polymerizing alkenes which are represented by CₙH₂ₙ, with n being an integer. As such, a polyolefin is solely composed of alkanediyl (alkylene) units represented by -CₙH₂ₙ-, with n being an integer. The alkanediyl units are non-polar, rendering the polyolefin hydrophobic.

That is, an unmodified polyolefin does not have any hydrophilic functional groups. On the other hand, the modifying agent has one or more hydrophilic functional groups. Accordingly, the expression "hydrophilicity higher than" is to be construed in a relative way such that the modifying agent has one or more hydrophilic functional groups whereas the unmodified polyolefin has none. In the same way, since it is modified with the modifying agent having a hydrophilicity higher than that of the unmodified polyolefin, also the modified polyolefin has a hydrophilicity higher than that of the unmodified polyolefin, taking into account that it has the one or more hydrophilic functional groups originating from the modifying agent.

As long as it can impart sufficient hydrophilicity to the at least one anchoring element, there is no particular limitation with respect to the modifying agent, including the one or more hydrophilic functional groups thereof. Without limitation, suitable hydrophilic functional groups include an amino group which is represented by -NH₂, a hydroxyl group which is represented by -OH, a sulfonic acid group which is represented by - S(=O)₂OH, a sulfonic ester group which is represented by -S(=O)₂OR, where R is lower alkyl having, e.g., 1 to 3 carbon atoms, a carboxylic acid group which is represented by -C(=O)OH, a carboxylic ester group which is represented by -C(=O)OR, where R is lower alkyl having, e.g., 1 to 3 carbon atoms, and a carboxylic anhydride group which is represented by -C(=O)O(O=)C-. In the modifying agent, a plurality of the same or a plurality of different functional groups may be present.

Upon modifying the unmodified polyolefin, the modifying agent forms part of a modified polyolefin. For doing so, apart from the one or more hydrophilic functional groups, the modifying agent has a double bond which is reactive with the monomers that form the polyolefin or is reactive with the polyolefin as such. Accordingly, suitable modifying agents include unsaturated amines, alcohols, acids, esters and anhydrides. As required, more than one modifying agent may be used.

In the modified polyolefin, the modifying agent having one or more hydrophilic functional groups may be present within the polymer backbone, yielding one of an alternating copolymer, a random copolymer and a block copolymer, or may be attached to the polymer backbone, yielding a graft copolymer. According to the present invention, it is preferred that the modified polyolefin is a graft copolymer, which means that the modifying agent is attached, i.e., grafted, to the polyolefin.

Without being limited thereto, (meth)acrylic acid, (meth)acrylic acid esters and vinyl esters may be mentioned as specific modifying agents. In a preferred embodiment, the modifying agent is an unsaturated cyclic anhydride. Exemplary unsaturated cyclic anhydrides include maleic anhydride, 2-methylmaleic anhydride and 2,3-dimethylmaleic anhydride, in particular maleic anhydride. Preferably, such unsaturated cyclic anhydrides are grafted to the polyolefin. Protocols for synthesizing such graft copolymers are well known in the art (see G. Moad, "The synthesis of polyolefin graft copolymers by reactive extrusion", Progress in Polymer Science, 1999, 24(1), 81-142).

Polypropylene grafted with maleic anhydride, also referred to as maleic anhydride grafted polypropylene and abbreviated as PP-g-MAH, is commercially available from various suppliers, e.g., as an additive from ExxonMobil under the brand "Exxelor PO 1020". By controlling the reaction conditions during the synthesis, the extent of grafting can be adjusted. For instance, in commercially available PP-g-MAH, the content of maleic anhydride is from 0.01 mass% to 30 mass% or even more, such as from 0.01 mass% to 10 mass%, based on the mass of the maleic anhydride grafted polypropylene. Due to traces of water present during the synthesis, maleic anhydride may be cleaved to yield maleic acid. For this reason, whenever reference is made herein to maleic anhydride, maleic acid as its hydrolyzed form shall be included as well.

For adjusting the hydrophilicity imparted to the at least one anchoring element, the amount of the modifying agent present may be controlled. Without being limited thereto, the content of the modifying agent may be from 0.01 mass% to 1 mass%, preferably from 0.02 mass% to 0.5 mass%, and more preferably from 0.02 mass% to 0.1 mass%, based on the total mass of the modified and unmodified polyolefin. Here, the content of the modifying agent is to be understood as the total content of modifying agents in case there is more than one modifying agent present. The content of the modifying agent may be determined by standard means well established in the art. For instance, in case of maleic anhydride as the modifying agent, the content thereof may be determined by means of chemical and viscosimetric titrations, and FTIR spectroscopy (see M. Sclavons et al., "Quantification of the maleic anhydride grafted onto polypropylene by chemical and viscosimetric titrations, and FTIR spectroscopy", Polymer, 2000, 41(6), 1989-1999).

As required, one or more additives may be present in the material constituting the at least one anchoring element in an amount so as not to impair the connection between the polymer membrane and the at least one anchoring element. For instance, by adding a pigment or a dye, it is possible to provide the at least one anchoring element with a specific color. By adding suitable stabilizers, the at least one anchoring element can withstand sterilization using gamma, X-ray or E-beam radiation. Other additives to be mentioned here include process stabilizers, antioxidants and release agents, without, however, being limited thereto.

Typically, the content of the modified and unmodified polyolefin is 50 mass% or more, preferably 75 mass% or more, more preferably 95 mass% or more, and particularly preferably 99 mass% or more, based on the total mass of the material constituting the at least one anchoring element. That is, the polyolefin, at least part of which is modified with a modifying agent having a hydrophilicity higher than that of the unmodified polyolefin, makes up the major part of the material constituting the at least one anchoring element. For instance, the material constituting the at least one anchoring element may essentially consist of the polyolefin, at least part of which is modified with a modifying agent having a hydrophilicity higher than that of the unmodified polyolefin.

Apart from the polymer membrane and the at least one anchoring element, the filter module may comprise additional components such as a backflow safeguard and/or a core, for instance. Besides, the filter module may comprise one or more drainage or support nonwovens which may be arranged on one or on both sides of the polymer membrane. Like the polymer membrane, these one or more drainage or support nonwovens may be pleated. Depending on the intended use of the filter module, a person skilled in the art selects such additional components as required.

In a further aspect, the present invention provides a method of manufacturing the filter module according to the present invention, the manufacturing method comprising the following steps (a) to (d):
(a) providing a polymer membrane and at least one anchoring element, wherein the material constituting the at least one anchoring element comprises a polyolefin, at least part of which is modified with a modifying agent having a hydrophilicity higher than that of the unmodified polyolefin,
(b) softening the at least one anchoring element;
(c) embedding a peripheral region of the polymer membrane in the at least one anchoring element being in a softened state; and
(d) hardening the at least one anchoring element having the peripheral region of the polymer membrane embedded therein to obtain the filter module.

The above-defined method of manufacturing the filter module, hereinafter also referred to as manufacturing method according to the present invention, serves to obtain the filter module according to the present invention with the features described above. Thus, wherever applicable, for the manufacturing method according to the present invention, the same definitions and limitations apply as given herein for the filter module according to the present invention, and *vice versa.*

In the following, the manufacturing method according to the present invention will be described in detail.

In step (a) of the manufacturing method according to the present invention, a polymer membrane and at least one anchoring element are provided. Apart from these essential components, a backflow safeguard and/or a core may be provided as additional components in step (a). Furthermore, one or more drainage or support nonwovens may be provided as additional components in step (a). These additional components, if present, are suitably arranged in or on the polymer membrane.

As mentioned above, the material constituting the at least one anchoring element comprises a polyolefin, at least part of which is modified with a modifying agent having a hydrophilicity higher than that of the unmodified polyolefin.

For obtaining the at least one anchoring element, the manufacturing method according to the present invention may further comprise, prior to step (a), reacting an unmodified polyolefin with the modifying agent, followed by remolding the obtained reaction product to obtain the at least one anchoring element. For instance, an unmodified polyolefin may be reacted with the modifying agent in such amounts that the content of the modifying agent is from 0.01 mass% to 1 mass%, preferably from 0.02 mass% to 0.5 mass%, and more preferably from 0.02 mass% to 0.1 mass%, based on the total mass of the modified and unmodified polyolefin. For instance, the reaction may be a grafting reaction using polypropylene as an unmodified polyolefin and maleic anhydride as the modifying agent. Typically, when reacting such unmodified polyolefin with such modifying agent, not every polymer chain is grafted, which means that there may be unmodified polymer chains left after the grafting reaction.

Alternatively, for obtaining the at least one anchoring element, the manufacturing method according to the present invention may further comprise, prior to step (a), mixing an unmodified polyolefin with a polyolefin which is modified with the modifying agent, followed by remolding the obtained mixture to obtain the at least one anchoring element. For instance, an unmodified polyolefin may be mixed with a polyolefin which is modified with the modifying agent in such amounts that the content of the modifying agent is from 0.01 mass% to 1 mass%, preferably from 0.02 mass% to 0.5 mass%, and more preferably from 0.02 mass% to 0.1 mass%, based on the total mass of the modified and unmodified polyolefin. Suitably, mixing of the unmodified polyolefin with a polyolefin which is modified with the modifying agent is accomplished by means of dry blending or compounding using co-kneaders, twin screws, internal mixers or the like. However, in principle, it is also possible to use only the polyolefin which is modified with the modifying agent for obtaining the at least one anchoring element. For instance, it is possible to use the additive "Exxelor PO 1020" in pure form.

Once the reaction product or the mixture has been obtained, e.g., in the form of granules, it is remolded to obtain the at least one anchoring element. Typically, such remolding is accomplished by means of injection molding, compression molding or extrusion.

In step (b) of the manufacturing method according to the present invention, the at least one anchoring element is softened. In order to soften the at least one anchoring element, it is partially heated beyond its glass transition temperature for amorphous polymers or beyond its melting temperature for semicrystalline polymers. In this context, it is sufficient to soften the at least one anchoring element at the site which shall receive the peripheral region of the polymer membrane for embedding the same, referred to as embedding site in the following. Accordingly, a targeted input of heat may be applied to the embedding site. Suitable devices which allow to apply a targeted input of heat are known to the skilled person.

In step (c) of the manufacturing method according to the present invention, a peripheral region of the polymer membrane is embedded in the at least one anchoring element being in a softened state. For doing so, the peripheral region of the polymer membrane is brought at the embedding site into the at least one anchoring element. In case of a polymer membrane having a tubular shape, the two open end faces of the polymer membrane may be brought at the embedding site into the respective end cap(s) or parts of end cap(s) serving as the anchoring element. In case of a polymer membrane having a flat shape, the perimeter of the polymer membrane may be brought at the embedding site into the frame serving as the anchoring element.

In step (d) of the manufacturing method according to the present invention, the at least one anchoring element having the peripheral region of the polymer membrane embedded therein is hardened. Hardening is accomplished by cooling below the glass transition temperature or below the melting temperature so that the softened state vanishes. For the sake of easiness, cooling can be performed passively by simply leaving the at least one anchoring element having the peripheral region of the polymer membrane embedded therein under ambient conditions. However, to accelerate the cooling procedure, the at least one anchoring element may be immersed in a water bath. Once hardening has been completed, the filter module is obtained.

In another aspect, the present invention relates to the use of the filter module according to the present invention for particle filtration, sterile filtration, ultrafiltration or virus filtration of a fluid medium.

The above-defined use, hereinafter also referred to as use according to the present invention, employs the filter module according to the present invention with the features described above, which can be obtained by the manufacturing method according to the present invention with the features described above. Thus, wherever applicable, for the use according to the present invention, the same definitions and limitations apply as given herein for the filter module according to the present invention as well as for the manufacturing method according to the present invention, and *vice versa.*

Depending on the intended use of the filter module, the polymer membrane may have a pore size in the range of 0.1 µm to 10 µm for particle filtration or sterile filtration, or may have a pore size in the range of 0.001 µm to 0.1 µm for ultrafiltration or virus filtration. While particle filtration clears particles, debris or agglomerations, sterile filtration clears microorganisms such as bacteria. While ultrafiltration can be used for buffer exchange or product concentration, virus filtration can achieve virus clearance during the purification of a biopharmaceutical product. The fluid medium which contains the biopharmaceutical product may be a liquid, in particular water or aqueous solutions.

Before being used for particle filtration, sterile filtration, ultrafiltration or virus filtration of a fluid medium, the filter module may be installed in a housing made of metal or plastic. In particular, this applies to filter cartridges which do not have a predefined inlet and a predefined outlet yet. Further, before its use, the filter module may be sterilized using gamma, X-ray or E-beam radiation. Typical radiation doses are in the range of 25 kGy to 100 kGy. Alternatively, it is possible to perform autoclaving at 120°C to 145°C for 15 min to 30 min, for example. Further, it is also possible to achieve sterilization by treatment with ethylene oxide. Sterilization ensures that the filter module is free of bioburden, which is a prerequisite for the purification of a biopharmaceutical product.

### Figure

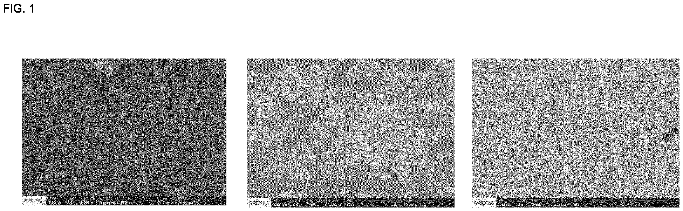

FIG. 1 shows scanning electron microscopic (SEM) images of end cap surfaces after removing a hydrophilic polyethersulfone membrane sealed thereon by chemical dissolution. A higher content of the additive "Exxelor PO 1020" from left to right led to a higher degree of adhesion, which becomes apparent after the chemical dissolution of the polymer membrane.

### Examples

The present invention is further illustrated by the following Examples without, however, being limited thereto.

### Preparation of end caps and sealing of membrane

"Purell HP373P" from LyondellBasell as a polypropylene grade and "Exxelor PO 1020" from ExxonMobil as a maleic anhydride grafted polypropylene were mixed by means of compounding. The content of "Exxelor PO 1020" in the obtained mixtures was 1 mass%, 2.5 mass%, 5 mass%, and 10 mass%, respectively. According to the information provided by the supplier, the content of maleic anhydride in "Exxelor PO 1020" was from 0.5 to 1.0 mass%. By remolding these mixtures, end caps were obtained. For the sake of comparison, an end cap made of pure "Purell HP373P" was obtained as well. In each case, a hydrophilic polyethersulfone membrane was sealed on the end cap.

### Removal of membrane by chemical dissolution

The hydrophilic polyethersulfone membranes sealed on the end caps were removed by chemical dissolution (immersion in 2-pyrrolidione for 18 hours). Then, SEM images of the end cap surfaces were taken, which are shown in **Fig.** 1. In the SEM image on the left side, the content of "Exxelor PO 1020" in the mixture was 0 mass%; in the SEM image in the middle, the content of "Exxelor PO 1020" in the mixture was 2.5 mass%; and in the SEM image on the right side, the content of "Exxelor PO 1020" in the mixture was 5 mass%. As can be recognized, the connection between the hydrophilic polyethersulfone membrane and the end cap was best on the right side where the content of "Exxelor PO 1020" in the mixture was highest.

### Evaluation of connection

For evaluating the connection between the hydrophilic polyethersulfone membrane and the end cap, the tear-off force required for disconnecting the hydrophilic polyethersulfone membrane and the end cap was determined in each case. It was found that the tear-off force increased along with the content of "Exxelor PO 1020" in the mixture. When the content of "Exxelor PO 1020" in the mixture was 2.5 mass% or more, disconnection was not possible. That is, the hydrophilic polyethersulfone membrane could only be removed by chemical dissolution.

### Virus retention

A batch of phages was cultivated to reach a concentration of 10⁶ to 10⁸ phages/L. The batch was diluted and divided into fractions. Then, the fractions were subjected to filtration using a filter module manufactured as described above. The filtrate was collected in each case and developed in Petri plates with a culture medium until so-called plaques (spots) formed on the plates. A single "plaque" indicated that one phage passed through the polymer membrane. Next, the plaques were counted, and by comparison with the initial concentration, a logarithmic reduction value (LRV) was obtained. As known to the skilled person, the LRV indicates how thoroughly the filtration process reduces the concentration of the substance to be separated. It is defined as the common logarithm of the ratio of the concentration of said substance before the filtration process to the concentration of said substance after the filtration process. Here, an increased virus retention of approximately 1.5 LRV was observed when the content of "Exxelor PO 1020" in the mixture was 10 mass% compared to pure "Purell HP373P".

As demonstrated hereinabove, when at least part of the polyolefin comprised in the material constituting the at least one anchoring element is modified with a modifying agent having a hydrophilicity higher than that of the unmodified polyolefin, it is possible to improve the connection between the polymer membrane and the at least one anchoring element with the result that a leakage in the filter module can be suppressed. Further, it was found that sterility and retention capability of the filter module can be maintained by the present approach.

## Claims

1. A filter module comprising a polymer membrane and at least one anchoring element,
wherein a peripheral region of the polymer membrane is embedded in the at least one anchoring element, and
wherein the material constituting the at least one anchoring element comprises a polyolefin, at least part of which is modified with a modifying agent having a hydrophilicity higher than that of the unmodified polyolefin.

2. The filter module according to claim 1, wherein the polymer constituting the polymer membrane is at least one selected from the group consisting of polysulfone, polyethersulfone, polyarylsulfone, cellulose, cellulose acetate, cellulose nitrate, polyether ether ketone, polyacrylonitrile, polyimide and polyamide.

3. The filter module according to claim 1 or 2, wherein the surface of the polymer membrane is permanently hydrophilized.

4. The filter module according to any one of claims 1 to 3, wherein for obtaining a fluid-tight connection between the polymer membrane and the at least one anchoring element, the polymer membrane is not subject to a coating or a thermal treatment in the peripheral region of the polymer membrane embedded in the at least one anchoring element or does not have a porous edge structure arranged on the peripheral region of the polymer membrane embedded in the at least one anchoring element.

5. The filter module according to any one of claims 1 to 4, wherein the polymer membrane has a tubular optionally pleated shape and the at least one anchoring element is an end cap or a part of an end cap.

6. The filter module according to any one of claims 1 to 4, wherein the polymer membrane has a flat shape and the at least one anchoring element is a frame.

7. The filter module according to any one of claims 1 to 6, wherein the polyolefin comprised in the material constituting the at least one anchoring element is polypropylene.

8. The filter module according to any one of claims 1 to 7, wherein the modifying agent is grafted to the polyolefin.

9. The filter module according to any one of claims 1 to 8, wherein the modifying agent is an unsaturated cyclic anhydride.

10. The filter module according to claim 9, wherein the unsaturated cyclic anhydride is maleic anhydride.

11. The filter module according to any one of claims 1 to 10, wherein the content of the modifying agent is from 0.01 mass% to 1 mass%, based on the total mass of the modified and unmodified polyolefin.

12. A method of manufacturing the filter module according to any one of claims 1 to 11, the manufacturing method comprising the following steps (a) to (d):
(a) providing a polymer membrane and at least one anchoring element, wherein the material constituting the at least one anchoring element comprises a polyolefin, at least part of which is modified with a modifying agent having a hydrophilicity higher than that of the unmodified polyolefin;
(b) softening the at least one anchoring element;
(c) embedding a peripheral region of the polymer membrane in the at least one anchoring element being in a softened state; and
(d) hardening the at least one anchoring element having the peripheral region of the polymer membrane embedded therein to obtain the filter module.

13. The manufacturing method according to claim 12, further comprising, prior to step (a), reacting an unmodified polyolefin with the modifying agent, followed by remolding the obtained reaction product to obtain the at least one anchoring element.

14. The manufacturing method according to claim 12, further comprising, prior to step (a), mixing an unmodified polyolefin with a polyolefin which is modified with the modifying agent, followed by remolding the obtained mixture to obtain the at least one anchoring element.

15. Use of the filter module according to any one of claims 1 to 11 for particle filtration, sterile filtration, ultrafiltration or virus filtration of a fluid medium.
